# EUROPEAN PATENT APPLICATION

(11) **EP 3 629 661 A1**
(43) Date of publication of application: **01.04.2020**
(21) Application number: 17918453.6
(22) Date of filing: 20.07.2017
(51) Int. Cl.: H04W 74/08

(54) **RANDOM ACCESS METHOD, NETWORK DEVICE AND TERMINAL DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/093735
(87) International publication number: WO 2019/014903

(57) **Abstract**

Disclosed in the embodiments of the application are a random access method, network device and terminal device. The method comprises: a network device receiving a plurality of preambles transmitted by a terminal device in a random access process; and the network device returning at least one Random Access Response (RAR) corresponding to at least one preamble in the plurality of preambles to the terminal device as feedback. The method, network device and terminal device in the embodiments of the present application are advantageous and increasing the reliability of preamble transmission and a probability for a network device to respond to a preamble.

## Description

### TECHNICAL FIELD

Embodiments of the disclosure relate to the field of communication, and more particularly to a random access method, a terminal device and a network device.

### BACKGROUND

In an existing Long Term Evolution (LTE) system, a random access process is divided into a contention based access and a non-contention based access. The non-contention based access refers that a network device configures a dedicated random access preamble for a terminal device to initiate access. The contention based access refers that a terminal device requests for a preamble to initiate access. No matter whether a terminal device performs the contention based access or non-contention based access, reliability of preamble transmission is not sufficiently high.

### SUMMARY

In view of this, the embodiments of the disclosure provide a random access method, a terminal device and a network device, which facilitates to improve reliability of preamble transmission and a probability that the network device responds to a preamble.

A first aspect provides a random access method, which may include the following operations. A network device receives multiple preambles from a terminal device in a random access process. The network device feeds back at least one Random Access Response (RAR) corresponding to at least one of the multiple preambles to the terminal device.

The random access process refers to a scenario that the terminal device continuously sends multiple preambles to the network device, rather than that the terminal device resends the preamble after random access for a preamble sent previously fails.

The network device may receive the multiple preambles from the terminal device in the random access process, which facilitates to improve reliability of preamble transmission and a probability that the network device responds to the preambles.

In a possible implementation mode, the operation that the network device feeds back the at least one RAR corresponding to the at least one of the multiple preambles to the terminal device may include the following actions. After a first preamble of the multiple preambles is received, the network device feeds back an RAR corresponding to the first preamble to the terminal device. After one or more of the multiple preambles except the first preamble is received, the network device feeds back no RAR to the terminal device.

In at least one embodiment, after an i-th preamble is received, the network device may also feed back an RAR corresponding to the i-th preamble to the terminal device, give no feedback for the first to (i-1)-th preambles and also give no feedback for the preambles after the i-th preamble. In other words, the network device feeds back only one RAR to the terminal device, where the RAR may be an RAR corresponding to any one preamble of n preambles and may be fed back to the terminal device immediately after the corresponding preamble is sent.

In a possible implementation mode, the at least one RAR may include multiple RARs, each of the multiple RARs corresponding to a respective one of the multiple preambles. The operation that the network device feeds back the at least one RAR corresponding to the at least one of the multiple preambles to the terminal device may include that: when a preamble of the multiple preambles is received, the network device feeds back an RAR corresponding to the preamble to the terminal device.

In at least one embodiment, when a preamble is received, the network device may immediately feed back the RAR to the terminal device and may also feed back the RAR to the terminal device after a certain time.

In a possible implementation mode, the operation that the network device feeds back the at least one RAR corresponding to the at least one of the multiple preambles to the terminal device may include the following action. After all the multiple preambles are received, the network device feeds back the at least one RAR to the terminal device.

In a possible implementation mode, the operation that after all the multiple preambles are received, the network device feeds back the at least one RAR corresponding to the at least one preamble to the terminal device may include the following action. After all the multiple preambles are received, the network device feeds back the at least one RAR to the terminal device according to signal strength of the received multiple preambles or a receiving sequence of the received multiple preambles.

In a possible implementation mode, the at least one RAR may include multiple RARs, and the multiple RARs may be carried in a Media Access Control (MAC) Protocol Data Unit (PDU).

In at least one embodiment, when the network device feeds back the RARs corresponding to the multiple preambles to the terminal device, each RAR may be carried in different MAC PDUs, and the multiple RARs may also be carried in the same MAC PDU.

In a possible implementation mode, the operation that the network device receives the multiple preambles from the terminal device in the random access process may include the following action. The network device receives the multiple preambles sent by the terminal device in the random access process through at least one Physical Random Access Channel (PRACH) resource.

In a possible implementation mode, the operation that the network device receives the multiple preambles from the terminal device in the random access process through the at least one PRACH resource may include the following action. The network device receives the multiple preambles from the terminal device in the random access process through multiple PRACH resources, each of the multiple PRACH resources corresponding to a respective one of the multiple preambles.

In at least one embodiment, the network device may preconfigure the multiple PRACH resources for transmission of the multiple preambles. A PRACH resource may also be roughly configured for transmission of the multiple preambles, and the terminal device independently determines a certain position in the PRACH resource to transmit a corresponding preamble. The network device may also configure that the multiple PRACH resources correspond to a beam or different PRACH resources correspond to different beams.

In a possible implementation mode, the random access process may be a contention based random access process, a non-contention based random access process or a random access process of acquiring system information.

A second aspect provides a random access method, which may include the following operations. A terminal device sends multiple preambles to a network device in a random access process. The terminal device receives at least one RAR corresponding to at least one of the multiple preambles from the network device.

In a possible implementation mode, the method may further include the following operation. The terminal device sends a third message (MSG3) in the random access process to the network device according to an uplink grant carried in a first RAR of the at least one RAR.

In a possible implementation mode, the first RAR may be a first RAR received by the terminal device within the at least one RAR.

In a possible implementation mode, the at least one RAR may include multiple RARs, and the multiple RARs may be carried in a MAC PDU.

In a possible implementation mode, the operation that the terminal device sends the multiple preambles to the network device in the random access process may include that: the terminal device sends the multiple preambles to the network device in the random access process through at least one PRACH resource.

In a possible implementation mode, the operation that the terminal device sends the multiple preambles to the network device in the random access process through the at least one PRACH resource may include the following action. The terminal device sends the multiple preambles to the network device in the random access process through multiple PRACH resources, each of the multiple PRACH resources corresponding to a respective one of the multiple preambles.

In a possible implementation mode, the random access process may be a contention based random access process, a non-contention based random access process or a random access process of acquiring system information.

A third aspect provides a network device, which is configured to implement the method in the first aspect or any possible implementation mode of the first aspect. Specifically, the network device includes units configured to implement the method in the first aspect or any possible implementation mode of the first aspect.

A fourth aspect provides a terminal device, which is configured to implement the method in the second aspect or any possible implementation mode of the second aspect. Specifically, the terminal device includes units configured to implement the method in the second aspect or any possible implementation mode of the second aspect.

A fifth aspect provides a network device, which includes a memory, a processor, an input interface and an output interface. The memory, the processor, the input interface and the output interface are connected through a bus system. The memory is configured to store an instruction. The processor is configured to execute the instruction stored in the memory to execute the method in the first aspect or any possible implementation mode of the first aspect.

A sixth aspect provides a terminal device, which includes a memory, a processor, an input interface and an output interface. The memory, the processor, the input interface and the output interface are connected through a bus system. The memory is configured to store an instruction. The processor is configured to execute the instruction stored in the memory to execute the method in the second aspect or any possible implementation mode of the second aspect.

A seventh aspect provides a computer storage medium, which is configured to store a computer software instruction for executing the method in the first aspect or any possible implementation mode of the first aspect or the method in the second aspect or any possible implementation mode of the second aspect and includes a program designed to execute the abovementioned aspects.

An eighth aspect provides a computer program product including an instruction, where the computer program product, when being executed in a computer, causes the computer to execute the method in the first aspect or any optional implementation mode of the first aspect or the method in the second aspect or any optional implementation mode of the second aspect.

These aspects or other aspects of the disclosure will become clearer and easier to understand through the following descriptions about the embodiments.

### BRIEF DESCRIPTION OF DRAWINGS

FIG. 1 is a schematic diagram of an application scenario according to an embodiment of the disclosure.
FIG. 2 is a schematic flowchart of a random access process.
FIG. 3 is a schematic block diagram of a random access method according to an embodiment of the disclosure.
FIG. 4 is a structure diagram of a MAC PDU carrying one or more RARs.
FIG. 5 is another schematic block diagram of a random access method according to an embodiment of the disclosure.
FIG. 6 is a schematic block diagram of a network device according to an embodiment of the disclosure.
FIG. 7 is a schematic block diagram of a terminal device according to an embodiment of the disclosure.
FIG. 8 is another schematic block diagram of a network device according to an embodiment of the disclosure.
FIG. 9 is another schematic block diagram of a terminal device according to an embodiment of the disclosure.

### DETAILED DESCRIPTION

The technical solutions in the embodiments of the disclosure will be clearly and completely described below in combination with the drawings in the embodiments of the disclosure.

It is to be understood that the technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD), a Universal Mobile Telecommunication System (UMTS), a Worldwide Interoperability for Microwave Access (WiMAX) communication system, a New Radio (NR) or future 5th-Generation (5G) system.

Particularly, the technical solutions of the embodiments of the disclosure may be applied to various nonorthogonal multiple access technology-based communication systems, for example, a Sparse Code Multiple Access (SCMA) system and a Low Density Signature (LDS) system, and of course, the SCMA system and the LDS system may also have other names in the field of communication. Furthermore, the technical solutions of the embodiments of the disclosure may be applied to multicarrier transmission systems adopting nonorthogonal multiple access technologies, for example, Orthogonal Frequency Division Multiplexing (OFDM), Filter Bank MultiCarrier (FBMC), Generalized Frequency Division Multiplexing (GFDM) and Filtered-OFDM (F-OFDM) systems adopting the nonorthogonal multiple access technologies.

In the embodiments of the disclosure, a terminal device may refer to User Equipment (UE), an access terminal, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device or another processing device connected to a wireless modem, a vehicle-mounted device, a wearable device, UE in a future 5G network, UE in a future evolved Public Land Mobile Network (PLMN) or the like. There are no limits made in the embodiments of the disclosure.

In the embodiments of the disclosure, a network device may be a device configured to communicate with the terminal device. The network device may be a Base Transceiver Station (BTS) in the GSM or the CDMA, may also be a NodeB (NB) in the WCDMA system, may also be an Evolutional Node B (eNB or eNodeB) in the LTE system and may further be a wireless controller in a Cloud Radio Access Network (CRAN) scenario. Or the network device may be a relay station, an access point, a vehicle-mounted device, a wearable device, a network device in the future 5G network, a network device in the future evolved PLMN or the like. There are no limits made in the embodiments of the disclosure.

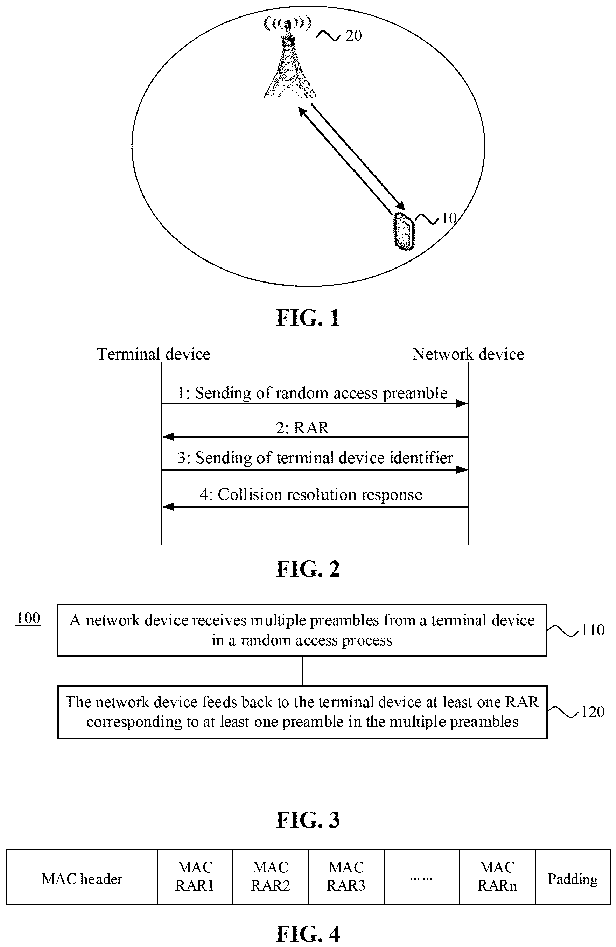

FIG. 1 is a schematic diagram of an application scenario according to an embodiment of the disclosure. A communication system in FIG. 1 may include a terminal device 10 and a network device 20. The network device 20 is configured to provide communication service for the terminal device 10 and access to a core network. The terminal device 10 searches a synchronization signal, broadcast signal and the like sent by the network device 20 to access the network, so as to communicate with the network. Arrows illustrated in FIG. 1 may represent uplink/downlink transmission implemented through a cellular link between the terminal device 10 and the network device 20.

A random access technology is the primary content for communication between a user and a network in a mobile communication system. In a wireless cellular network, a user initiates a connection request to a network side through a random access process. In an LTE system, the main purpose of random access is to establish uplink synchronization and receive a Cell Radio Network Temporary Identifier (C-RNTI). Therefore, random access is not only applied to initial access but also applied to a status that a user is out of uplink synchronization. For ease of understanding, a random access process will be briefly introduced below in combination with FIG. 2. As illustrated in FIG. 2, the following operations are mainly included.
1: A random access preamble is sent by a terminal device at first and mainly provided for enabling a network device to correctly estimate a transmission delay of a terminal device and solving the problem of collision caused by simultaneous initiation of access requests by multiple terminal devices.
2: Feedback information, i.e., an RAR, sent to the terminal by the network device includes: transmission delay for uplink synchronization and an overload condition in access of a present system (which are used for the terminal device to avoid collision by adopting a backoff mechanism). In addition, the network device further feeds back to the terminal position information of uplink resources allocated to the access terminal device.
3: The terminal device sends a message corresponding to a random access event and a terminal device identifier C-RNTI of the terminal device on a specified uplink resource.
4: The network device feeds back collision resolution information to the terminal device. In this way, the conflict problem caused by simultaneously requesting for access to system by the multiple terminal devices will completely be solved through the random access process.

Because of the finiteness of access resources, when the multiple terminal devices simultaneously initiate access on the same access resource, a collision will occur. The terminal device may determine whether present random access fails according to the following: whether the feedback information in operation 2 is received within an RAR time window, or whether a preamble in the received feedback information is consistent with that sent by the terminal device itself. Specifically, if the terminal device does not receive the feedback information within the RAR time window, or if the received feedback information includes no preamble consistent with that sent by itself, the terminal device may determine that the present random access fails. In addition, the terminal device may further determine that a contention resolution fails according to the collision resolution information in operation 4, and also determines that the present random access fails.

In researches on future wireless communication systems such as 5G, a Beamforming (BF) technology is important to improve coverage and spectrum efficiency. BF is an implementation manner for an intelligent adaptive array antenna, and is a digital signal processing technology implemented on an antenna array consisting of multiple array elements. Differences of a useful signal and an interference signal in spatial channel characteristics such as direction of arrival are utilized, and a proper weighted value is set for the antenna array, so that the useful signal and the interference signal are spatially isolated, and thus to achieve purposes of reducing interference between users and improve a system capacity.

In a random access process, a terminal device may send preambles to a network device by using multiple beams, so as to improve a probability that the network device responds to random access of the terminal device. When a communication system supports transmission of multiple preambles, it is a problem to be solved on how a network device responds to multiple preambles.

FIG. 3 is a schematic block diagram of a random access method 100 according to an embodiment of the disclosure. As illustrated in FIG. 3, the method 100 may include part or all of the following operations.

In S110, a network device receives multiple preambles from a terminal device in a random access process.

In S120, the network device feeds back at least one RAR corresponding to at least one of the multiple preambles to the terminal device.

First, in at least one embodiment, an application scenario of the embodiment of the disclosure is that multiple preambles are sent in the random access process, unlike the following scenario in an LTE system that: a terminal device sends a preamble to a network device in a random access process and, if the random access fails, the terminal device resends the same preamble to the network device. In other words, the terminal device continuously sends multiple preambles in a random access process, and the terminal device is not required to resend a preamble when an RAR corresponding to the preamble sent previously is not monitored.

Second, in at least one embodiment of the disclosure, the multiple preambles may be preambles of which sequences are completely different and may also be preambles of which sequences are partially the same. The multiple preambles may be sent by using different beams and may also be sent by using the same beam, which will not be specifically limited herein.

Therefore, according to the random access method of the embodiment of the disclosure, the network device may receive the multiple preambles from the terminal device in a random access process, which facilitates to improve reliability of preamble transmission and a probability that the network device responds to the preambles.

The technical solution that the network device feeds back the RAR to the terminal device in the disclosure will be described below in detail based on the following embodiments.
1. The terminal device sends m preambles to the network device, and m RARs are fed back to the terminal device.
2. The terminal device sends m preambles to the network device, and the network device feeds back n RARs to the terminal device, m≥n>1.
3. The terminal device sends m preambles to the network device, and the network device feeds back 1 RAR to the terminal device.

Usually, the number of preambles received by the network device is less than or equal to the number of the preambles sent by the terminal device to the network device.

In at least one embodiment of the disclosure, the operation that the network device feeds back the at least one RAR corresponding to the at least one of the multiple preambles to the terminal device includes the following actions. After a first preamble in the multiple preambles is received, the network device feeds back an RAR corresponding to the first preamble to the terminal device; and after one or more of the multiple preambles except the first preamble is received, the network device feeds back no RAR to the terminal device.

That is, after receiving the first preamble, the network device may immediately feed back the RAR for the first preamble to the terminal device, and the network device feeds back no RAR to the terminal device after receiving the other preambles. In other words, the network device feeds back only one RAR to the terminal device, and this RAR is the RAR for the first preamble.

In at least one embodiment, after receiving the i-th preamble, the network device may also feed back an RAR corresponding to the i-th preamble to the terminal device, give no feedback for the first to (i-1)-th preambles and also give no feedback for preambles after the i-th preamble. In other words, the network device feeds back only one RAR to the terminal device, where the RAR may be an RAR corresponding to any one preamble of the n preambles; and the RAR may be fed back to the terminal device immediately after the corresponding preamble is sent.

In at least one embodiment of the disclosure, the at least one RAR includes multiple RARs, each of the multiple RARs corresponding to a respective one of the multiple preambles. The operation that the network device feeds back the at least one RAR corresponding to the at least one of the multiple preambles to the terminal device includes that: after every one preamble of the multiple preambles is received, the network device feeds back to the terminal device an RAR corresponding to the preamble of the multiple preambles.

After every one preamble is received, the network device may feed back to the terminal device the RAR corresponding to the preamble. That is, the RARs fed back to the terminal device by the network device correspond to the preambles received by the network device, and each of the RARs corresponds to a respective one of the preambles. Specifically, after each preamble is received, the network device may immediately feed back a RAR to the terminal device and may also feed back the RAR to the terminal device after a certain time. A time interval between reception of the preamble and feedback of the corresponding RAR by the network device is not limited in the embodiment of the disclosure.

In at least one embodiment of the disclosure, the operation that the network device feeds back the at least one RAR corresponding to the at least one of the multiple preambles to the terminal device includes that: after all the multiple preambles are received, the network device feeds back the at least one RAR to the terminal device.

The network device may also select at least one preamble therefrom for feedback after all the preambles are received. For example, the network device configures transmission resources of five preambles for the terminal device, and the network device may determine by default that the terminal device sends the five preambles to the network device in a random access process. After the five preambles are received by the network device, the network device may select one or more preambles therefrom for feedback. If the network device receives three preambles and does not receive the fourth preamble within a predetermined time, the network device may determine by default that the other two preambles are lost and may directly select one or more preambles from the three received preambles for feedback.

The abovementioned manners in which the network device feeds back the RAR to the terminal device for the multiple preambles is only for schematic description, and are not intended to limit the embodiment of the disclosure.

In at least one embodiment of the disclosure, the operation that the network device feeds back the at least one RAR corresponding to the at least one preamble to the terminal device after all the multiple preambles are received includes that: after all the multiple preambles are received, the network device feeds back the at least one RAR to the terminal device according to signal strength of the received multiple preambles or a receiving sequence of the multiple preambles.

The network device may feed back the RAR to the terminal device according to the receiving sequence of the preambles. For example, the network device may give a feedback for the first one or more received preambles. The network device may also feed back the RAR to the terminal device according to the signal strength of the received preambles. For example, the network device may give a feedback for one or more preambles with highest signal strength in the received multiple preambles. It should be understood that the above two manners of feeding back the RAR to the terminal device are only examples and are not intended to limit the scope of the embodiment of the disclosure.

In at least one embodiment of the disclosure, the at least one RAR includes multiple RARs, and the multiple RARs are carried in a MAC PDU.

Those skilled in the art will understand that one or more RARs is usually carried in a MAC PDU, and a structure of the MAC PDU is as illustrated in FIG. 4. As can be seen in FIG. 4, the MAC PDU consists of a MAC header plus zero or more MAC RARs plus a possible padding, where a MAC RAR corresponds to a preamble. Specifically, when the network device feeds back the RARs corresponding to the multiple preambles to the terminal device, each RAR may be carried in different MAC PDUs, and the multiple RARs may also be carried in the same MAC PDU.

In at least one embodiment of the disclosure, the operation that the network device receives the multiple preambles from the terminal device in the random access process includes that: the network device receives the multiple preambles from the terminal device in the random access process through at least one PRACH resource.

In at least one embodiment of the disclosure, the operation that the network device receives the multiple preambles from the terminal device in the random access process through the at least one PRACH resource includes the following action. The network device receives the multiple preambles from the terminal device in the random access process through multiple PRACH resources, each of the multiple PRACH resources corresponding to a respective one of the multiple preambles.

Those skilled in the art will understand that a PRACH is used for transmitting a random access preamble. The network device may preconfigure multiple PRACH resources for transmission of the multiple preambles. A PRACH resource may also be roughly configured to transmit the multiple preambles, and the terminal device independently determines a certain position in the PRACH resource to transmit a corresponding preamble. The network device may also configure that the multiple PRACH resources correspond to a beam or different PRACH resources correspond to different beams. There are no limits made thereto in the embodiment of the disclosure.

In at least one embodiment of the disclosure, the random access process is a contention based random access process, a non-contention based random access process or a random access process of acquiring system information.

That is, a specific scenario of the random access process is not limited in the embodiment of the disclosure.

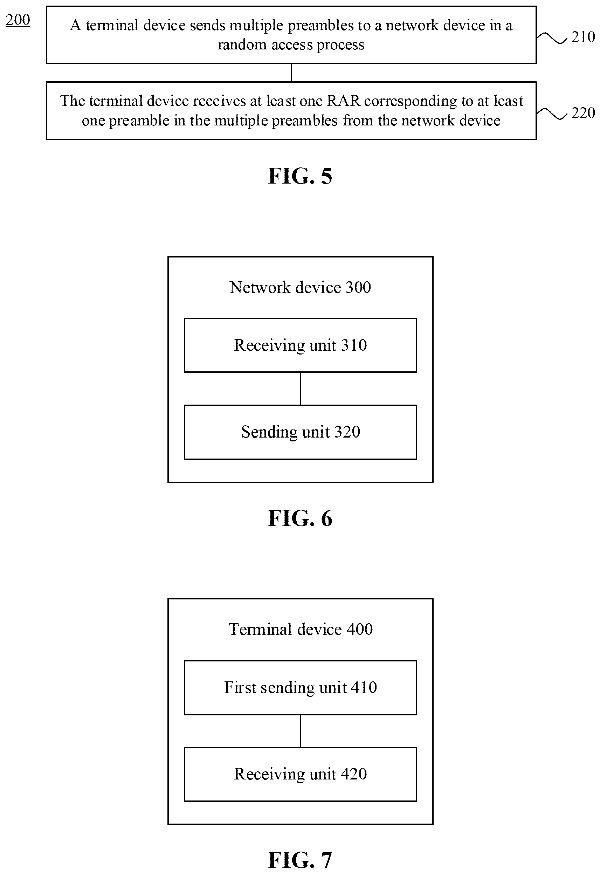

FIG. 5 is a schematic block diagram of a random access method 200 according to an embodiment of the disclosure. As illustrated in FIG. 5, the method 200 may include part or all of the following operations.

In S210, a terminal device sends multiple preambles to a network device in a random access process.

In S220, the terminal device receives at least one RAR corresponding to at least one of the multiple preambles from the network device.

Therefore, according to the random access method of the embodiment of the disclosure, the terminal device sends multiple preambles to the network device in a random access process, which facilitates to improve reliability of preamble transmission and a probability that the network device responds to the preambles.

In at least one embodiment of the disclosure, the method further includes that: the terminal device sends a third message (MSG3) in the random access process to the network device according to an uplink grant carried in a first RAR of the at least one RAR.

After an RAR for a certain preamble is monitored by the terminal device, the terminal device may send the MSG3 in the random access process to the network device according to the uplink grant carried in the RAR. Contents of such messages are variable in the random access process, and thus different messages are carried based on different scenarios. For example, RRC connection requests may be carried sometimes, and some control messages and even service data packets, etc. may be carried sometimes.

In a future wireless communication system such as 5G, the MSG3 in a random access process may include the following.
1. An initial RRC connection is established: when a terminal device is switched from an idle state to a connected state, the terminal device can initiate random access.
2. An RRC connection is re-established: after a radio link fails, the terminal device is required to re-establish the RRC connection, and UE can initiate random access.
3. During handover of the terminal device, the terminal device can initiate random access in a target cell, and at this time, the terminal device is required to establish uplink synchronization with a new cell.
4. In the RRC connected state, if downlink data arrives but the terminal device is in an uplink out-of-synchronization state (a network device maintains an uplink timer, and if the uplink timer has expired and the network device receives no sounding signal from the terminal device, the network device determines that the terminal device is in the uplink out-of-synchronization state), and the network device will control the terminal device to initiate random access.
5. In the RRC connected state, if uplink data arrives but the terminal device is in the uplink out-of-synchronization state (the network device maintains the uplink timer, and if the uplink timer has expired and the terminal device does not receive regulation of Time Advance (TA) command from the network device, the terminal device determines that it is in the uplink out-of-synchronization state) or there is no available Physical Uplink Control Channel (PUCCH) resource for Scheduling Request (SR) transmission, and the terminal device initiates random access.
6. Random access is initiated when the terminal device is switched from an inactive state to the connected state.
7. The terminal acquires system information.

In at least one embodiment of the disclosure, an RAR for a first preamble is a first RAR monitored by the terminal device in the at least one RAR.

That is, the terminal device may send the third message to the network device according to the uplink grant carried in the first monitored RAR. Or, under the condition that multiple RARs are monitored within the at least one RAR window, the terminal device may also select any RAR therefrom and send the third message to the network device according to an uplink grant carried in the selected RAR. For example, if multiple RARs are monitored by the terminal device, the terminal device may send the third message to the network device according to an uplink grant carried in the first monitored RAR. The terminal device may also send the third message to the network device according to an uplink grant carried in the RAR with highest signal strength in the received multiple RARs. The terminal may also select an RAR from the multiple RARs according to another strategy and send the third message to the network device according to an uplink grant carried in the selected RAR. The embodiment of the disclosure is not limited thereto.

In at least one embodiment of the disclosure, the at least one RAR includes multiple RARs, and the multiple RARs are carried in a MAC PDU.

In at least one embodiment of the disclosure, the operation that the terminal device sends the multiple preambles to the network device in the random access process includes that: the terminal device sends the multiple preambles to the network device in the random access process through at least one PRACH resource.

In at least one embodiment of the disclosure, the operation that the terminal device sends the multiple preambles to the network device in the random access process through the at least one PRACH resource includes that: the terminal device sends the multiple preambles to the network device in the random access process through multiple PRACH resources. The multiple PRACH resources have a one-to-one correspondence with the multiple preambles.

In at least one embodiment of the disclosure, the random access process is a contention based random access process, a non-contention based random access process or a random access process of acquiring system information.

It is to be understood that terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

It is to be understood that interactions between the terminal device and the network device and related properties, functions and the like described from the terminal device side correspond to related properties and functions of the network device. Moreover, the related operations have been described in detail in the method 100 and will not be elaborated herein for simplicity.

It is also to be understood that in various embodiments of the disclosure, a magnitude of a sequence number of each process does not mean an execution sequence, and the execution sequence of each process should be determined by its function and an internal logic and should not form any limit to an implementation process of the embodiments of the disclosure.

The random access method according to the embodiments of the disclosure is described above in detail and a random access device according to the embodiments of the disclosure will be described below in combination with FIG. 6 to FIG. 9. The technical features described in the method embodiments are applied to the following device embodiments.

FIG. 6 is a schematic block diagram of a network device 300 according to an embodiment of the disclosure. As illustrated in FIG. 6, the network device 300 includes a receiving unit 310 and a sending unit 320.

The receiving unit 310 is configured to receive multiple preambles from a terminal device in a random access process.

The sending unit 320 is configured to feed back at least one RAR corresponding to at least one of the multiple preambles to the terminal device.

Therefore, the network device of the embodiment of the disclosure may receive the multiple preambles from the terminal device in the random access process, which facilitates to improve reliability of preamble transmission and a probability that the network device responds to the preambles.

In at least one embodiment of the disclosure, the sending unit is specifically configured to: after a first preamble of the multiple preambles is received, feed back an RAR corresponding to the first preamble to the terminal device, and after one or more of the multiple preambles except the first preamble is received, feed back no RAR to the terminal device.

In at least one embodiment of the disclosure, the at least one RAR includes multiple RARs corresponding to the multiple preambles, and the multiple RARs have a one-to-one correspondence with the multiple preambles. The sending unit is specifically configured to, every time when one preamble of the multiple preambles is received, feed back to the terminal device an RAR corresponding to the preamble.

In at least one embodiment of the disclosure, the sending unit is specifically configured to, after the network device receives all the multiple preambles, feed back the at least one RAR to the terminal device.

In at least one embodiment of the disclosure, the receiving unit is specifically configured to, after all the multiple preambles are received, feed back the at least one RAR to the terminal device according to signal strength of the received multiple preambles or a receiving sequence of the multiple preambles.

In at least one embodiment of the disclosure, the at least one RAR includes multiple RARs, and the multiple RARs are carried in a MAC PDU.

In at least one embodiment of the disclosure, the receiving unit 310 is specifically configured to receive the multiple preambles from the terminal device in the random access process through at least one PRACH resource.

In at least one embodiment of the disclosure, the receiving unit 310 is specifically configured to receive the multiple preambles from the terminal device in the random access process through multiple PRACH resources, and each PRACH resource corresponds to a respective one of the multiple preambles.

In at least one embodiment of the disclosure, the random access process is a contention based random access process, a non-contention based random access process or a random access process of acquiring system information.

It is to be understood that the network device 300 according to the embodiment of the disclosure may correspond to the network device in the method embodiment of the disclosure. The abovementioned and other operations and/or functions of each unit in the network device 300 are adopted to implement the corresponding flows executed by the network device in the methods in FIG. 3 and FIG. 4 respectively and will not be elaborated herein for simplicity.

FIG. 7 is a schematic block diagram of a terminal device 400 according to an embodiment of the disclosure. As illustrated in FIG. 7, the terminal device 400 includes a first sending unit 410 and a receiving unit 420.

The first sending unit 410 is configured to send multiple preambles to a network device in a random access process.

The receiving unit 420 is configured to receive at least one RAR corresponding to at least one of the multiple preambles from the network device.

Therefore, the terminal device of the embodiment of the disclosure sends the multiple preambles to the network device in the random access process, which facilitates to improve reliability of preamble transmission and improve a probability that the network device responds to the preambles.

In at least one embodiment of the disclosure, the terminal device 400 further includes a second sending unit, configured to send a third message in the random access process to the network device according to an uplink grant carried in a first RAR of the at least one RAR.

In at least one embodiment of the disclosure, the first RAR is a first RAR received by the terminal device within the at least one RAR.

In at least one embodiment of the disclosure, the at least one RAR includes multiple RARs, and the multiple RARs are carried in a MAC PDU.

In at least one embodiment of the disclosure, the first sending unit is specifically configured to send the multiple preambles to the network device in the random access process through at least one PRACH resource.

In at least one embodiment of the disclosure, the first sending unit 410 is specifically configured to send the multiple preambles to the network device in the random access process through multiple PRACH resources corresponding to the multiple preambles, where each PRACH resource corresponds to a respective one of the multiple preambles.

In at least one embodiment of the disclosure, the random access process is a contention based random access process, a non-contention based random access process or a random access process of acquiring system information.

It is to be understood that the terminal device 400 according to the embodiment of the disclosure may correspond to the terminal device in the method embodiment of the disclosure. The abovementioned and other operations and/or functions of each unit in the terminal device 400 are adopted to implement the corresponding flows executed by the terminal device in the method in FIG. 5 respectively and will not be elaborated herein for simplicity.

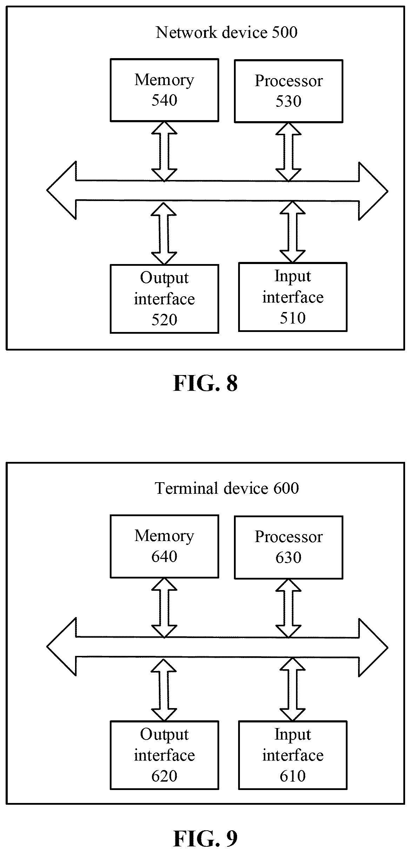

As illustrated in FIG. 8, an embodiment of the disclosure also provides a network device 500. The network device 500 may be the network device 300 in FIG. 6, and may be configured to execute corresponding operations of the network device in the method 100 in FIG. 3 and FIG. 4. The network device 500 includes an input interface 510, an output interface 520, a processor 530 and a memory 540. The input interface 510, the output interface 520, the processor 530 and the memory 540 may be connected through a bus system. The memory 540 is configured to store a program, an instruction or a code. The processor 530 is configured to execute the program instruction or code in the memory 540 to control the input interface 510 to receive a signal, control the output interface 520 to send a signal and implement operations in the foregoing method embodiments.

Therefore, the network device of the embodiment of the disclosure may receive multiple preambles from a terminal device in a random access process, which facilitates to improve RAR feedback reliability of the network device.

It is to be understood that, in the embodiment of the disclosure, the processor 530 may be a Central Processing Unit (CPU), and the processor 530 may also be another universal processor, a Digital Signal Processor (DSP), an Disclosure Specific Integrated Circuit (ASIC), a Field Programmable Gate Array (FPGA) or another programmable logic device, discrete gate or transistor logic device and discrete hardware component and the like. The universal processor may be a microprocessor or the processor may also be any conventional processor and the like.

The memory 540 may include a Read-Only Memory (ROM) and a Random Access Memory (RAM), and provides an instruction and data to the processor 530. A part of the memory 540 may further include a non-volatile RAM. For example, the memory 540 may further store information of a device type.

In an implementation process, each operation of the method may be implemented by an integrated logic circuit of hardware in the processor 530 or an instruction in software. The operations of the method disclosed in combination with the embodiments of the disclosure may be directly embodied to be executed and completed by a hardware processor or executed and completed by a combination of hardware and software modules in the processor. The software module may be located in a mature storage medium in this field such as a RAM, a flash memory, a ROM, a programmable ROM or electrically erasable programmable ROM and a register. The storage medium is located in the memory 540. The processor 530 reads information in the memory 540 and completes the contents of the method in combination with hardware. No more detailed descriptions will be made herein to avoid repetitions.

In a specific implementation mode, the sending unit of the network device 300 may be implemented by the output interface 520 in FIG. 8, and the receiving unit of the network device 300 may be implemented by the input interface 510 in FIG. 8.

As illustrated in FIG. 9, an embodiment of the disclosure also provides a terminal device 600. The terminal device 600 may be the terminal device 400 in FIG. 7, and may be configured to execute operations of the terminal device corresponding to the method 200 in FIG. 5. The terminal device 600 includes an input interface 610, an output interface 620, a processor 630 and a memory 640. The input interface 610, the output interface 620, the processor 630 and the memory 640 may be connected through a bus system. The memory 640 is configured to store a program, an instruction or a code. The processor 630 is configured to execute the program instruction or code in the memory 640 to control the input interface 610 to receive a signal, control the output interface 620 to send a signal and complete operations in the method embodiments.

Therefore, the terminal device of the embodiment of the disclosure sends multiple preambles to a network device in a random access process, which facilitates to improve preamble transmission reliability as well as a probability that the network device responds to the preambles.

It is to be understood that in the embodiment of the disclosure, the processor 630 may be a CPU and the processor 630 may also be another universal processor, a DSP, an ASIC, an FPGA or another programmable logic device, discrete gate or transistor logic device and discrete hardware component and the like. The universal processor may be a microprocessor or the processor may also be any conventional processor and the like.

The memory 640 may include a ROM and a RAM and provides an instruction and data for the processor 630. A part of the memory 640 may further include a non-volatile RAM. For example, the memory 640 may further store information of a device type.

In an implementation process, each operation of the method may be implemented by an integrated logic circuit of hardware in the processor 630 or an instruction in software. The operations of the method disclosed in combination with the embodiments of the disclosure may be directly embodied to be executed and completed by a hardware processor or executed and completed by a combination of hardware and software modules in the processor. The software module may be located in a mature storage medium in this field such as a RAM, a flash memory, a ROM, a programmable ROM or electrically erasable programmable ROM and a register. The storage medium is located in the memory 640. The processor 630 reads information in the memory 640 and completes the contents of the method in combination with hardware. No more detailed descriptions will be made herein to avoid repetitions.

In a specific implementation mode, the first sending unit and second sending unit in the terminal device 400 may be implemented by the output interface 620 in FIG. 9, and the receiving unit in the terminal device 400 may be implemented by the input interface 610 in FIG. 9.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by using different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of each embodiment of the disclosure. The storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A random access method, comprising:
receiving, by a network device, multiple preambles from a terminal device in a random access process; and
feeding back, by the network device, at least one Random Access Response, RAR, corresponding to at least one of the multiple preambles to the terminal device.

2. The method of claim 1, wherein feeding back, by the network device, the at least one RAR corresponding to the at least one of the multiple preambles to the terminal device comprises:
after a first preamble of the multiple preambles is received, feeding back, by the network device, an RAR corresponding to the first preamble to the terminal device; and
after one or more of the multiple preambles except the first preamble is received, feeding back, by the network device, no RAR to the terminal device.

3. The method of claim 1, wherein the at least one RAR comprises multiple RARs, each of the multiple RARs corresponding to a respective one of the multiple preambles, and feeding back, by the network device, the at least one RAR corresponding to the at least one of the multiple preambles to the terminal device comprises:
after every one preamble of the multiple preambles is received, feeding back, by the network device, an RAR corresponding to the preamble to the terminal device.

4. The method of claim 1, wherein feeding back, by the network device, the at least one RAR corresponding to the at least one of the multiple preambles to the terminal device comprises:
after all the multiple preambles are received, feeding back, by the network device, the at least one RAR to the terminal device.

5. The method of claim 4, wherein after all the multiple preambles are received, feeding back, by the network device, the at least one RAR corresponding to the at least one preamble to the terminal device comprises:
after all the multiple preambles are received, feeding back, by the network device, the at least one RAR to the terminal device according to signal strength of the received multiple received preambles or a receiving sequence of the received multiple preambles.

6. The method of claim 5, wherein the at least one RAR comprises multiple RARs, and the multiple RARs are carried in a Media Access Control, MAC, Protocol Data Unit, PDU.

7. The method of any one of claims 1-6, wherein receiving, by the network device, the multiple preambles from the terminal device in the random access process comprises:
receiving, by the network device, the multiple preambles from the terminal device in the random access process through at least one Physical Random Access Channel, PRACH, resource.

8. The method of claim 7, wherein receiving, by the network device, the multiple preambles from the terminal device in the random access process through the at least one PRACH resource comprises:
receiving, by the network device, the multiple preambles from the terminal device in the random access process through multiple PRACH resources, each of the multiple PRACH resources corresponding to a respective one of the multiple preambles.

9. The method of any one of claims 1-8, wherein the random access process is a contention based random access process, a non-contention based random access process or a random access process of acquiring system information.

10. A random access method, comprising:
sending, by a terminal device, multiple preambles to a network device in a random access process; and
receiving, by the terminal device, at least one Random Access Response, RAR, corresponding to at least one of the multiple preambles from the network device.

11. The method of claim 10, further comprising:
sending, by the terminal device, a third message, MSG3, in the random access process to the network device according to an uplink grant carried in a first RAR of the at least one RAR.

12. The method of claim 11, wherein the first RAR is a first RAR received by the terminal device within the at least one RAR.

13. The method of any one of claims 10-12, wherein the at least one RAR comprises multiple RARs, and the multiple RARs are carried in a Media Access Control (MAC) Protocol Data Unit, PDU.

14. The method of any one of claims 10-13, wherein sending, by the terminal device, the multiple preambles to the network device in the random access process comprises:
sending, by the terminal device, the multiple preambles to the network device in the random access process through at least one Physical Random Access Channel, PRACH, resource.

15. The method of claim 14, wherein sending, by the terminal device, the multiple preambles to the network device in the random access process through the at least one PRACH resource comprises:
sending, by the terminal device, the multiple preambles to the network device in the random access process through multiple PRACH resources, each of the multiple PRACH resources corresponding to a respective one of the multiple preambles.

16. The method of any one of claims 10-15, wherein the random access process is a contention based random access process, a non-contention based random access process or a random access process of acquiring system information.

17. A network device, comprising:
a receiving unit, configured to receive multiple preambles from a terminal device in a random access process; and
a sending unit, configured to feed back at least one Random Access Response, RAR, corresponding to at least one of the multiple preambles to the terminal device.

18. The network device of claim 17, wherein the sending unit is configured to:
after a first preamble of the multiple preambles is received, feed back an RAR corresponding to the first preamble to the terminal device; and
after one or more of the multiple preambles except the first preamble is received, feed back no RAR to the terminal device.

19. The network device of claim 17, wherein the at least one RAR comprises multiple RARs, each of the multiple RARs corresponding to a respective one of the multiple preambles, and the sending unit is configured to:
after every one preamble of the multiple preambles is received, feed back an RAR corresponding to the preamble to the terminal device.

20. The network device of claim 17, wherein the sending unit is configured to:
after all the multiple preambles are received, feed back the at least one RAR to the terminal device.

21. The network device of claim 20, wherein the sending unit is configured to:
after all the multiple preambles are received, feed back the at least one RAR to the terminal device according to signal strength of the received multiple preambles or a receiving sequence of the received multiple preambles.

22. The network device of claim 21, wherein the at least one RAR comprises multiple RARs, and the multiple RARs are carried in a Media Access Control, MAC, Protocol Data Unit, PDU.

23. The network device of any one of claims 17-22, wherein the receiving unit is configured to:
receive the multiple preambles from the terminal device in the random access process through at least one Physical Random Access Channel, PRACH, resource.

24. The network device of claim 23, wherein the receiving unit is configured to:
receive the multiple preambles from the terminal device in the random access process through multiple PRACH resources, each of the multiple PRACH resources corresponding to a respective one of the multiple preambles.

25. The network device of any one of claims 17-24, wherein the random access process is a contention based random access process, a non-contention based random access process or a random access process of acquiring system information.

26. A terminal device, comprising:
a first sending unit, configured to send multiple preambles to a network device in a random access process; and
a receiving unit, configured to receive at least one Random Access Response, RAR, corresponding to at least one of the multiple preambles from the network device.

27. The terminal device of claim 26, further comprising:
a second sending unit, configured to send a third message, MSG3, in the random access process to the network device according to an uplink grant carried in a first RAR of the at least one RAR.

28. The terminal device of claim 27, wherein the first RAR is a first RAR received by the terminal device within the at least one RAR.

29. The terminal device of any one of claims 26-28, wherein the at least one RAR comprises multiple RARs, and the multiple RARs are carried in a Media Access Control, MAC, Protocol Data Unit, PDU.

30. The terminal device of any one of claims 26-29, wherein the first sending unit is configured to:
send the multiple preambles to the network device in the random access process through at least one Physical Random Access Channel, PRACH, resource.

31. The terminal device of claim 30, wherein the first sending unit is configured to:
send the multiple preambles to the network device in the random access process through multiple PRACH resources, each of the multiple PRACH resources corresponding to a respective one of the multiple preambles.

32. The terminal device of any one of claims 26-31, wherein the random access process is a contention based random access process, a non-contention based random access process or a random access process of acquiring system information.
